# EUROPEAN PATENT APPLICATION

(11) **EP 4 163 075 A1**
(43) Date of publication of application: **12.04.2023**
(21) Application number: 21216475.0
(22) Date of filing: 21.12.2021
(51) Int. Cl.: B29B 17/00, B29B 7/12, B29B 7/82, B01F 27/00, B29C 43/36, B29C 43/52

(54) **A METHOD FOR PRODUCING AN ARTICLE MANUFACTURED FROM THERMOPLASTIC AND FIBER WASTE AND A COMPOSITE MATERIAL COMPRISING THERMOPLASTIC AND FIBER WASTE**

(71) Applicant: Mater A/S, 2400 Copenhagen NV (DK)
(72) Inventor: Marstrand, Henrik, 2400 Copenhagen NV (DK)
(74) Representative: Nordic Patent Service A/S

(57) **Abstract**

A method for producing a composite article (1) from at least one virgin and/or used thermoplastic component and at least one used fiber material component and a composite material comprising at least one virgin and/or used thermoplastic component and at least one used fiber material component.

## Description

### TECHNICAL FIELD

The disclosure relates to a method for producing an article manufactured from thermoplastic and fiber waste products and to a composite material comprising thermoplastic and fiber waste.

### BACKGROUND

Thermoplastics are relatively easy to recycle for use in production methods for obtaining new articles. However, the situation is much more challenging for fiber material waste products, be it organic fiber material, e.g., leftover products originating from industrial food processing, textile and wood manufacturing or inorganic fiber material such as glass fiber or carbon fibers. Sorted waste foodstuff or organic fiber material is often used for various purposes, such as for production of biogas or as fertilizer. Hence, there is a need for viable alternatives for recycling fiber material.

### SUMMARY

It is an object to provide a product, a method for manufacturing the product and a compression mold for producing the product, all of which overcome or reduce the problems mentioned herein above.

The foregoing and other objects are achieved by the features of the independent claims. Further implementation forms are apparent from the dependent claims, the description and the figures.

According to a first aspect, there is provided a method for producing a composite article from at least one virgin and/or used thermoplastic component and at least one used fiber material component comprising:
supplying the components to a thermokinetic mixer, thermokinetic mixing the at least one thermoplastic component and the at least one fiber component in the thermokinetic mixer thereby at least partially melting the plastic component and creating a composite material in the form of a mixture of the at least partially molten thermoplastic component and the fiber material component,
arranging the mixture of at least partially molten thermoplastic component and fiber material component in a cooling mold cavity,
cooling the mixture of at least partially molten thermoplastic component and fiber material component in the cooling compression mold until the thermoplastic component has substantially solidified, thereby forming the composite article, and
removing the composite article from the cooling compression mold.

Thermokinetic mixing comprises forming a turbulent centrifugal annular layer of increasing density of components along an inner wall of a mixing cylinder, preferably comprising exposing components to high acceleration thereby causing interaction with the braking effect of friction at walls of a mixing chamber resulting in large differences in particle velocity within the annular layer and intensive mixing turbulences. Such friction generates heat, i.e., kinetic heat, which at least partially melts the components through the process known as "thermokinetic mixing".

The thermoplastic component fulfils the function of matrix or binder by holding the filler together in the composite to be formed. Thermoplastic type must be chosen with regards to the melting point, so this will not exceed the combustion temperature of the filler, i.e., approximately 100°C. By mixing the at least one thermoplastic component and the at least one fiber component in the thermokinetic mixer the plastic component is at least partially melted, and a composite material is created. The process is advantageously very tolerant in terms of using different plastic types in the same batch, including plastic types with different melting points. For visual and tactile purposes, a mix of fiber types and plastic types with different melting points can be employed to give the final product a specific structure and/or color.

In a possible implementation form of the first aspect the mixture of at least partially molten thermoplastic component and fiber material component is transported from the thermokinetic mixer to a cooling compression mold, the cooling compression mold having a mold cavity.

In a possible implementation form of the first aspect the cooling compression mold is openable, and preferably comprises at least two parts that can move relative to one another for opening and closing the cooling compression mold, the method further comprising opening the compression mold before arranging the mixture of at least partially molten thermoplastic component and fiber material component in the cooling mold cavity.

In a possible implementation form of the first aspect the method comprises molding the molded article in the compression cooling mold for between 5 min. and 30 min., such as between 10 min. and 20 min., such as for 15 min.

In a possible implementation form of the first aspect the method comprises opening the compression mold after the thermoplastic component has substantially solidified, preferably to a temperature below 55°C, such as to a temperature below 50°C, such as to a temperature below 45°C, such as preferably to a temperature of approximately 40°C, more preferably to a temperature of approximately 35°C, even more preferably to a temperature of approximately 30°C, even more preferably to a temperature of approximately 25°C, even more preferably to a temperature of approximately 20°C, most preferably to a temperature below 20°C, such as to a temperature of approximately 15°C, such as most preferably to a temperature of approximately 10°C.

In a possible implementation form of the first aspect the method comprises removing the article using ejection pins.

The thickness of the molded article, and hence cooling time required during solidification of the composite material, is paramount to obtaining a viable molded article. Thickness is an important parameter for assessing the risk of generating pockets/voids comprising gas from the plastic and/or vapor from the fibrous filler, hindering cooling within an optimal amount of time. Thus, in a possible implementation form of the first aspect the article is actively cooled by a cooling fluid passing through at least one cooling channel in at least one mold part, thereby achieving a cooling effect of the at least one mold part on the molten mixture. Thus, by the passing of a cooling fluid through at least one cooling channel a cooling effect of the mold part is achieved on the molten mixture, thereby reducing the amount of time required for obtaining a cooled, solidified molded article.

In a possible implementation form of the first aspect the method comprises adjusting the cooling effect of the compression mold to achieve sufficient solidification for removal of the composite article within a predetermined amount of time. By adjusting the cooling effect of the compression mold on the molten mixture, reproducibility of cooling rate in varying conditions, such as varying ambient temperature conditions is also advantageously achieved.

In a possible implementation form of the first aspect the compression mold comprises one or more cooling channels in at least one of the at least two parts, the method comprising flowing a cooling fluid through the one or more cooling channels.

In a possible implementation form of the first aspect a cooling effect of an at least one mold part on the molded article is achieved by adjusting temperature, flow direction and/or volume flow rate of the cooling fluid to obtain a substantially solid molded plastic component within a given amount of time.

In a possible implementation of the first aspect, the cooling fluid is cooled by a heat exchanger, which is either integral or separate from the cooling compression mold. Thereby, precise and continuous temperature of the cooling fluid may be achieved and precise and continuous temperature adjustment of the composite material may be achieved.

In a possible implementation of the first aspect the cooling fluid is passed through at least one cooling channel by a pump. Thereby, precise and sustained volume flow rate of cooling fluid within the at least one cooling channel may be achieved. Thereby, precise and continuous temperature adjustment of the composite material may be achieved.

In a possible implementation form of the first aspect at least two cooling channels are used to achieve a cooling effect of at least one mold part on the composite article, wherein fluid is passed in opposing directions in each of the cooling channels for achieving a homogeneous cooling effect on the article.

In a possible implementation form of the first aspect the temperature of the cooling fluid is within a range of from 1 degree Celsius to 30°C, preferably within a range from 5°C to 25°C, more preferably within a range from 10°C to 25°C, even more preferably within a range from 15°C to 20°C, most preferably at approximately 20°C. The temperatures provide optimal heat dissipation from fiber and molten thermoplastic component mixture through the cooling mold parts.

In a possible implementation form of the first aspect the volume of the mixture arranged in the mold cavity is greater than the volume of said mold cavity when said mold parts are in the closed position.

In a possible implementation form of the first aspect the volume of the mixture arranged in the mold cavity is slightly greater than the volume of said mold cavity when said mold parts are in the closed position, such as at least 2% greater, such as at least 5% greater, such as approximately 10% greater. By allowing for a greater volume of mixture to be introduced into a mold part overall time for producing a molded article is beneficially reduced.

In a possible implementation form of the first aspect the mold parts compress the mixture arranged within the mold cavity before a seal is created between the edges on the peripheries of the respective mold parts, these temporarily allowing outflow of a volume of mixture in excess of the volume of the mold cavity when the mold parts are closed. At least part of the volume of said mixture in excess of the volume of said mold cavity is collected in a recess arranged in at least one mold part at a distance from an edge of said mold part. Thereby, even when a volume of mixture in excess of the volume of the mold cavity when the mold parts are closed is introduced, only a volume approximately equating the volume of the mold cavity when the mold parts are closed remains in the mold cavity and is molded. Also, the volume of mixture that flows out of the closing compression mold is collected in a manner that does not hinder the closing of the mold parts. Thereby, the time required for obtaining a molded product is reduced and a molded article with the desired shape and finish is advantageously obtained. Further, by the volume of the mold cavity diminishing, pressure is increased, and void volume and the risk of bubbles forming is reduced. Thereby, the mixture may be advantageously pressed to achieve a molded article with the desired shape and finish.

In a possible implementation form of the first aspect the method comprises applying pressure to the mixture of at least partially molten thermoplastic component and fiber material component in the mold cavity by the mold parts.

In a possible implementation form of the first aspect the method comprises controlling pressure applied by the mold parts to the mixture of at least partially molten thermoplastic component and fiber material component in the mold cavity.

In a possible implementation form of the first aspect the pressure applied to the mixture of at least partially molten thermoplastic component and fiber material component in the mold cavity by the mold parts is between 100 bar and 200 bar, such as between 125 bar and 175 bar, such as approximately 150 bar.

In a possible implementation form of the first aspect the thermokinetic mixer is a rotating thermokinetic mixer and comprising controlling rotational speed and/or mixing time of the thermokinetic mixer to achieve a desired discharge temperature after a fixed period of kinetic mixing, the rational speed preferably being between approximately 500 rpm and approximately 10.000 rpm, more preferably between 1000 rpm and 5000 rpm, even more preferably between 2000 rpm and 4000 rpm and most preferably approximately 3000 rpm.

In a possible implementation form of the first aspect the discharge temperature is attained after a set period of kinetic mixing and is preferably comprised between 150°C and 280°C, more preferably between 200°C and 250°C, even more preferably between 180°C and 240°C and most preferably approximately 230°C. Such temperatures are optimal for obtaining a mixture where the thermoplastic is melted sufficiently to act as a binder around the fibers, the mixture can be in the form of a molten lump that is easily deformed, and the fibers are shredded or broken down to optimal sizes for providing strength and flexibility to the molded article once cooled.

In a possible implementation form of the first aspect the method comprises controlling discharge temperature of the mixture when removed from the thermokinetic mixer to a desired discharge temperature, the discharge temperature preferably being lower than a combustion temperature of the fiber component, e.g., approximately 100°C.

In a possible implementation form of the first aspect the kinetic mixing comprises forming a turbulent centrifugal annular layer of increasing density of components along an inner wall of a mixing cylinder, preferably comprising exposing components to high acceleration thereby causing interaction with the braking effect of friction at walls of a mixing chamber resulting in large differences in particle velocity within the annular layer and intensive mixing turbulences.

In a possible implementation form of the first aspect at least 30 % w/w of the plastic component is molten by thermokinetic mixing, such as at least 40% w/w, such as at least 50% w/w, such as at least 60% w/w, such as at least 70% w/w, such as at least 80% w/w, such as at least 90% w/w, such as approximately 100% w/w,.

In a possible implementation form of the first aspect the fiber component is inorganic or organic, or a mixture thereof.

In a possible implementation form of the first aspect the at least 50% of the thermoplastic component is used material, such as at least 60%, such as at least 70%, such as at least 80%, such as at least 90%, such as approximately 100%.

In a possible implementation form of the first aspect the organic fiber component comprises or is one or more of coffee ground, coffee husk, paper, cardboard, wood or wood waste, spent grain, textile.

In a possible implementation form of the first aspect the inorganic fiber component is mineral-based, such as material coming from a building site waste stream, and/or glass or carbon fibers such as fiber glass.

In a possible implementation form of the first aspect the method comprises the thermoplastic material comprises or is one or more of ABS, PC/ABS, HDPE, LDPE, PET, PP, biodegradable plastic, e.g., certain plastics produced by POND^{®}.

In a possible implementation form of the first aspect the composite article is preferably produced from 30% w/w to 99% w/w thermoplastic component, more preferably from approximately 40% w/w to 60% w/w, even more preferably from approximately 50% w/w thermoplastic component.

In a possible implementation form of the first aspect, fiber component is comprised within a range from 15% w/w to 60% w/w, such as 20% to 60% w/w, such as 30% to 60% w/w, such as 40% to 60% w/w, such as 50% to 60% w/w.

In a possible implementation form of the first aspect wherein organic material is comprised in the composite material, the organic material is dried. Preferably the organic material is dried to an extent where the moisture content (MC) is below 1% w/w, more preferably to an extent where MC is approximately 0% w/w. Drying the organic material advantageously provides a used material that is not prone to microbial growth and, thus, provides for an article with a longer useful life. Furthermore, the presence of water in the fibers can lead to the formation of water vapor during kinetic mixing, and the appearance of bubbles or pockets devoid of thermoplastic binder, thus diminishing the strength of the molded article.

In a possible implementation form of the first aspect the step of transporting the mixture of at least partially molten thermoplastic component and fiber material component from the thermokinetic mixer to a cooling compression mold, the cooling compression mold having a mold cavity is also contemplated.

In a possible implementation form of the first aspect preferably between1% w/w and 10% w/w coloring agent is supplied to the thermomixer prior to arranging the mixture in a mold cavity, more preferably approximately between 4% w/w and 7% w/w, most preferable approximately 5% w/w.

Adding a coloring agent will change the viscosity of the molten material. Hence, there is a trade-off with regards the ability to sufficiently and/or efficiently filling the compression mold (due to high viscosity of the molten material) and generating a viable molded article and the visual character of the article produced.

According to a second aspect, there is provided a composite article produced by the method according to any the first aspect or any possible implementations thereof.

According to a second aspect, there is provided a composite material comprising an organic fiber, such as coffee ground, coffee husk, paper, cardboard, wood or wood waste, spent grain, textile or an inorganic fiber, such as fiber glass or carbon fibers and a thermoplastic component, such as ABS, PC/ABS, HDPE, LDPR or bioplastic or bio-resin (such as that manufactured by POND^{®}).

In one possible implementation form of the second aspect the thermoplastic is selected from the group comprising ABS, PC/ABS, HDPE, LDPE and bio plastic.

In one possible implementation form of the second aspect thermoplastic is comprised within a range of 35% w/w to 96% w/w, preferably comprised at approximately 40% w/w, even more preferably comprised at approximately 50% w/w. The high percentage of thermoplastic component allows for satisfactory binding of the fiber component in the composite material.

In one possible implementation form of the second aspect fiber component is comprised within a range from 15% w/w to 60% w/w, such as 20% to 60% w/w, such as 30% w/w to 60% w/w, such as 40% w/w to 60% w/w, such as 50% w/w to 60% w/w.

In one possible implementation form of the second aspect the greatest dimension of the fibers of the used fiber component is below 5cm, such as below 4cm, such as below 3cm, such as below 2cm, such as approximately 1cm in length, and the fibers are embedded in the thermoplastic material of the thermoplastic component, such that the thermoplastic material holds the fiber component together, thereby acting as a binder.

In one possible implementation form of the second aspect the used fiber component is a small particulate, such as that the greatest dimension of the fibers a below 0.01mm, such as below 0.005mm, such as approximately 0.0025mm, and the fibers are embedded in the thermoplastic material of the thermoplastic component, such that the thermoplastic material holds the fiber component together, thereby acting as a binder.

By the fibers of the fiber component being in the range of a small particulate in size, the surface area available for binder adhesion is advantageously increased, which leads to a stronger composite material once cooled.

In one possible implementation form of the second aspect between approximately 1% w/w and 5% w/w coloring agent is comprised in the composite material, preferable approximately 4% w/w coloring agent is comprised. Coloring agent advantageously increases the viscosity of the composite material while adding desirable coloring effect to the composite article.

In one possible implementation form of the second aspect the melting point of the thermoplastic component is below the combustion temperature of the fiber component and/or the coloring agent, such as below 100°C.

In one possible implementation form of the second aspect the thermoplastic component comprises a mix of thermoplastic material types with different melting points. By the thermoplastic component comprising plastics with different melting points, a product with a specific structure and/or color may be advantageously produced according to the method of the first aspect.

In a further possible implementation form of the second aspect is a composite material produced by a method for producing a composite article from at least one virgin and/or used thermoplastic component and at least one used fiber material component comprising:
supplying the components to a thermokinetic mixer,
thermokinetic mixing the at least one thermoplastic component and the at least one fiber component in the thermokinetic mixer thereby at least partially melting the plastic component and creating a composite material in the form of a mixture of the at least partially molten thermoplastic component and the fiber material component,
arranging the mixture of at least partially molten thermoplastic component and fiber material component in a cooling mold cavity,
cooling the mixture of at least partially molten thermoplastic component and fiber material component until the thermoplastic component has substantially solidified thereby forming the composite article, and
removing the composite article from the cooling compression mold.

In a further possible implementation form of the second aspect the fibers of the fiber component are embedded in the thermoplastic material of the thermoplastic component as a result of the thermokinetic mixing, such that the thermoplastic material holds the fiber component fibers together when cooled, thereby acting as a binder.

According to a third aspect, there is provided a use of a composite material according to the second aspect and contemplated implementations thereof for producing a composite article.

In one possible implementation form of the third aspect the composite material according to the second aspect is used as starting material to produce a composite article by a method for producing a composite article from at least one virgin and/or used thermoplastic component and at least one used fiber material component comprising:
supplying the components to a thermokinetic mixer, thermokinetic mixing the at least one thermoplastic component and the at least one fiber component in the thermokinetic mixer thereby at least partially melting the plastic component and creating a composite material in the form of a mixture of the at least partially molten thermoplastic component and the fiber material component,
arranging the mixture of at least partially molten thermoplastic component and fiber material component in a mold cavity,
cooling the mixture of at least partially molten thermoplastic component and fiber material component until the thermoplastic component has substantially solidified (no longer is partially molten), thereby forming the composite article, and
removing the composite article from the cooling compression mold.

According to a fourth aspect, there is provided a compression mold for producing a composite article from a mixture of an at least partially molten thermoplastic component and a fiber material component, the compression mold having at least to mold parts that together define a mold cavity, the edges of the mold parts around the mold cavity in their closed position arranged to meet along a full circumference or perimeter of the mold cavity to form a sealed enclosure,
at least one of the mold parts comprising at least one cooling channel for passing a cooling fluid therethrough. By comprising at least one cooling channel, a cooling effect of the at least one mold part on the article may be advantageously achieved. Thereby, cooling rate of the molded article may be advantageously achieved. Achieving a reproducible cooling rate is important for the molding of the composite material into a viable product meeting desired physical parameters, such as density, elasticity, plasticity, etc. Also, with appropriate cooling the risk of the molded article breaking when removed from the compression mold is reduced. A second advantage of imparting a cooling effect on the article is that cooling of the article may be accelerated and overall production time diminished, thereby reducing manufacturing costs in comparison to production costs using non-cooled molds. A third advantage of imparting a cooling effect on the article is that the temperature of cooling of the article may be reproduced in successive iterations of the cooling process, even where other variables, such as ambient temperature, are different.

In a possible implementation of the fourth aspect, at least one mold part forming the cooling compression mold comprises at least one circumferential recess arranged to follow the contour of the edge for collecting overflow flowing from mold cavity. By at least one mold part comprising at least one circumferential recess for collecting overflow flowing from the mold cavity, the mold parts may join correctly and form said seal around said mold cavity despite a volume of molding material in excess of the volume of the mold cavity being arrange in said cavity.

In a possible implementation form of the fourth aspect at least one mold part comprises at least one channel inlet on one side and a corresponding number of channel outlets on another side of the at least one mold part.

In a possible implementation form of the fourth aspect the at least one channel describes a substantially straight path between an inlet and an outlet. Thereby, the mold part comprising at least one channel may be easily produced by drilling a single time for each channel straight through the body of the mold part, thereby generating the substantially straight channel and comprising an inlet and an outlet on opposing sides of the mold part body. Thereby production costs of a compression mold according to the fourth aspect may be reduced when compared to other possible inlet/outlet/channel configurations.

In a possible implementation form of the fourth aspect at least one channel describes a substantially meandering path through the mold part body, and between an inlet and an outlet. Thereby, the cooling effect of the cooling fluid may cover a greater area than if only substantially straight cooling channels are used, and, consequently, fewer channels are required to achieve a cooling effect of the compression mold across the entire surface of the mixture of an at least partially molten thermoplastic component and a fiber material component. By meandering it is meant a path comprising at least one substantial change in direction.

In one possible implementation form of the fourth aspect the path of the at least one channel describes at least one meander and the inlet and the corresponding outlet are on the same side of the at least one mold part body. Thereby, passing of the cooling fluid through a heat exchanger and passing of the cooling fluid to and from the at least one mold part may be more easily achieved, such as where the heat exchanger and at least one cooling channel are comprised in a closed loop cooling circuit.

In a possible implementation form of the fourth aspect, the at least on cooling channel is comprised in a cooling circuit, the cooling circuit further comprising a heat exchanger. Thereby, cooling fluid may be advantageously cooled to the desired temperature prior to passing through the at least one cooling channel.

In a possible implementation form of the fourth aspect, the cooling circuit comprising a heat exchanger is a closed circuit, i.e., the cooling circuit including the at least on cooling channel and the heat exchanger forms a closed loop such that cooling fluid passes through the at least on cooling channel, the heat exchanger and a cooling channel sequentially. Thereby, cooling fluid may be continuously cooled to a desired temperature by the cooling fluid sequentially passing through the at least one cooling channel where it absorbs thermal energy from the mold part and through the heat exchanger where the cooling fluid dissipates at least part of the thermal energy thereby attaining a desired temperature before passing through a cooling channel again.

In a possible implementation form of the fourth aspect, the cooling circuit further comprises a pump that actively circulates the cooling fluid through the cooling circuit. Thereby, volume flow rate, i.e., the volume of fluid that travels through the pump in a given amount of time, and flow direction may be advantageously adjusted by adjusting the rate at which the pump pushes fluid through the circuit.

In a further possible implementation form of the fourth aspect the pump comprises a pump controller whereby fluid volume flow rate and/or flow direct may be adjusted automatically, e.g., by adjusting the parameters for maintaining a desired cooling fluid or mold part temperature.

In a possible implementation form of the fourth aspect one mold part forms a male part and another mold part forms a matching female part, movement of the male part relative to the female part allowing for volume change of the mold cavity whilst a seal is maintained thereby preventing outflow of the mixture of an at least partially molten thermoplastic component and a fiber material component between the male and female parts at the edges of the mold parts around the mold cavity. By the volume of the mold cavity diminishing, pressure is increased, and void volume and the risk of bubbles forming is reduced. Thereby, the mixture may be advantageously pressed to achieve a molded article with the desired shape and finish.

In a possible implementation form of the fourth aspect at least the surface of the mold parts that define the mold cavity are formed by aluminum or an alloy thereof. By using aluminum or an alloy thereof optimal thermal conductivity between the at least one cooling channel and the molded article is achieved. Further, the aluminum inlay also improves distribution of the cooling effect from the cooling channels to the mold cavity. Also, the aluminum inlay provides protection to the mold part surface from the composite material, thereby increasing durability of the mold parts. Depending on the shape complexity of the final product (molded article), it might be needed to make a separate mold for deep drawing the inlay sheets.

In a possible implementation form of the fourth aspect the compression mold has a heat exchanger coupled to the at least one cooling channel. By the heat exchanger being coupled to at least one cooling channel, the cooling fluid may be advantageously cooled upon exiting the cooling channel and directed into the same or another cooling channel. Also, the temperature of the cooling fluid may be optimally adjusted to the requirements of the specific thermoplastic component and a fiber component mixture and/or stage of the cooling of the molded article.

In a possible implementation form of the fourth aspect a controller is operably coupled to the heat exchanger coupled to the at least on cooling channel. The controller may automatically control the target temperature setting of the heat exchanger to control the cooling effect of the compression mold on the mixture of an at least partially molten thermoplastic component and a fiber material component to meet the cooling rate requirements of the given composite material in function of, e.g., ambient temperature, desired cooling profile, cooling process stage and/or desired physical properties of the finished molded article.

In a possible implementation form of the fourth aspect a sensor is operatively coupled to a heat exchanger and/or a pump that affect the temperature and/or volume flow rate/flow direction of the cooling fluid within the cooling channels. Such a sensor may be, e.g., a thermometer able to effect temperature readings of the mold parts before, during and/or after the cooling process.

In a possible implementation form of the fourth aspect the compression mold has a fluidic actuator operably coupled to at least one of the mold parts for applying a closing force to the mold parts and applying a pressure to the mixture of an at least partially molten thermoplastic component and a fiber material component.

In a possible implementation form of the fourth aspect guides are comprised around the closing lines, preferably comprised on the first, upper mold part and "catching" the second, lower molt part before other parts or surfaces of the mold parts contact. A preferred cross-sectional diameter of the guides is comprised between 20mm and 30mm. By comprising the guides, mechanical wear around the closing lines is advantageously reduced.

In a possible implementation form of the fourth aspect the compression mold comprises a controller configured for controlling the pressure applied by the fluidic actuator to the mixture of an at least partially molten thermoplastic component and a fiber material component.

In a possible implementation form of the fourth aspect the compression mold comprises at least one ejector pin for ejecting the composite article from the compression mold.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 is a flow chart illustrating an embodiment of a method for producing a composite article.
Fig. 1a is a diagrammatic representation of a thermokinetic mixer,
Fig. 1b is an example of an article manufactured with the method of Fig. 1 in the compression mold of Fig. 4,
Fig. 1c is an example of an article manufactured with the method of Fig.1 in the compression mold of Fig. 10,
Fig. 2 is an elevated sectional view of an embodiment of a compression mold for producing a composite article in a closed position,
Fig. 3 is a cross-sectional view of the compression mold of

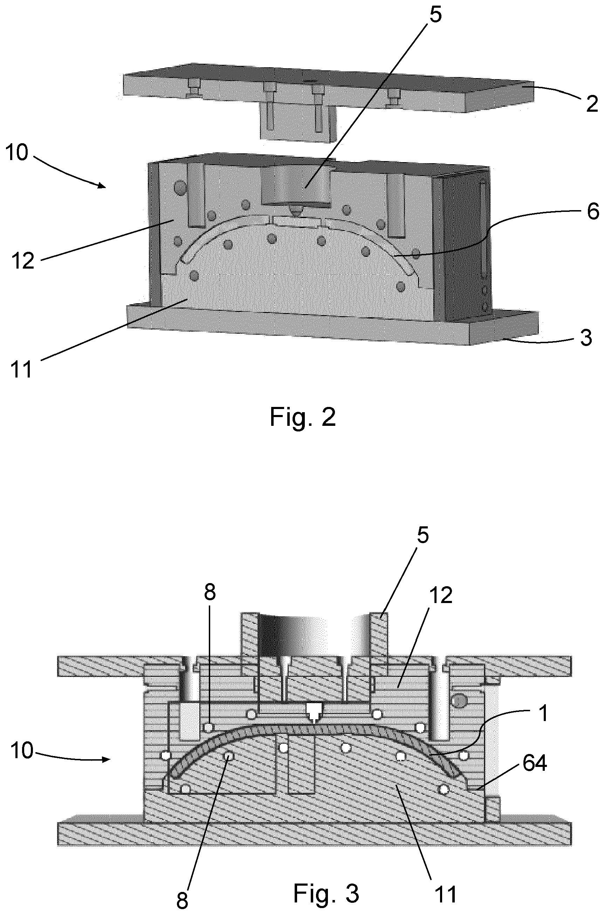

Fig. 2 in a closed position,

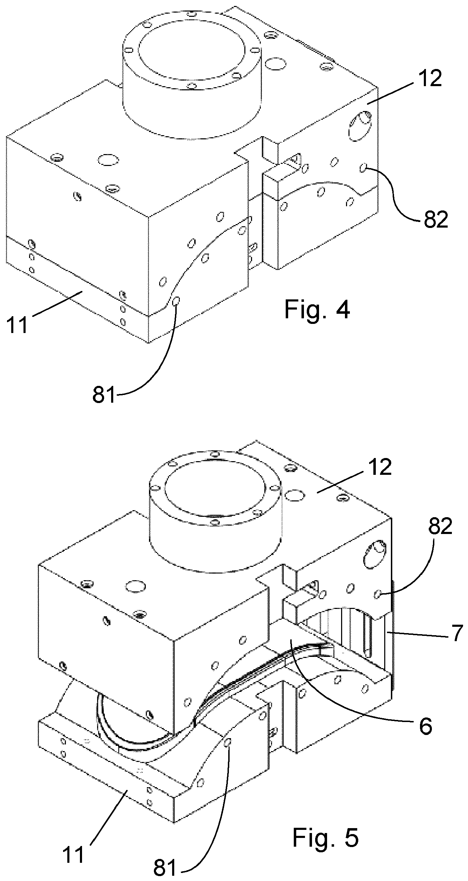

Fig. 4 is an elevated view of a compression mold according to
Fig. 2 in a closed position,
Fig. 5 is an elevated view of the compression mold of Fig.4 in an open position,

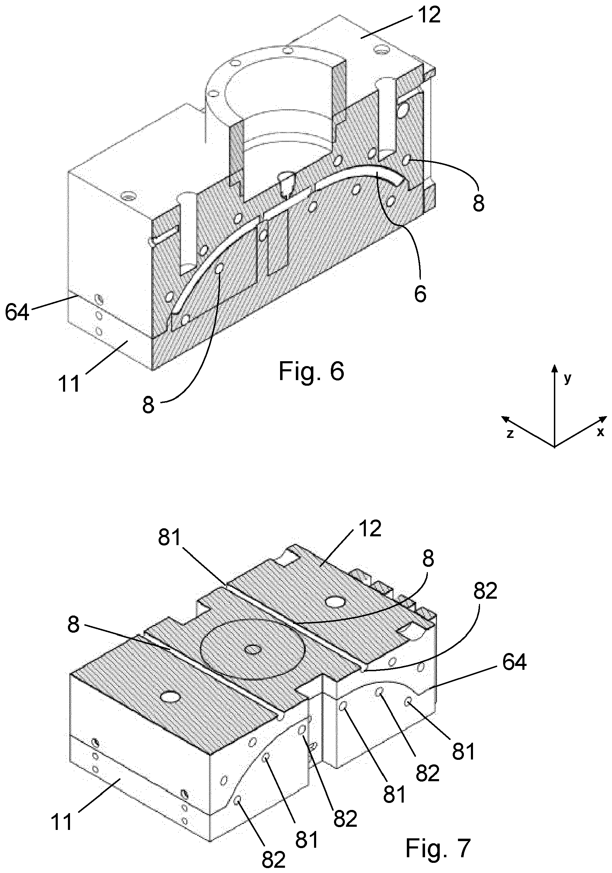

Fig. 6 is an elevated sectional view across the (x,y) plane of the compression mold of Fig. 4 in a closed position,
Fig. 7 is an elevated sectional view across the (x,z) plane of the compression mold of Fig. 4 in a closed position,

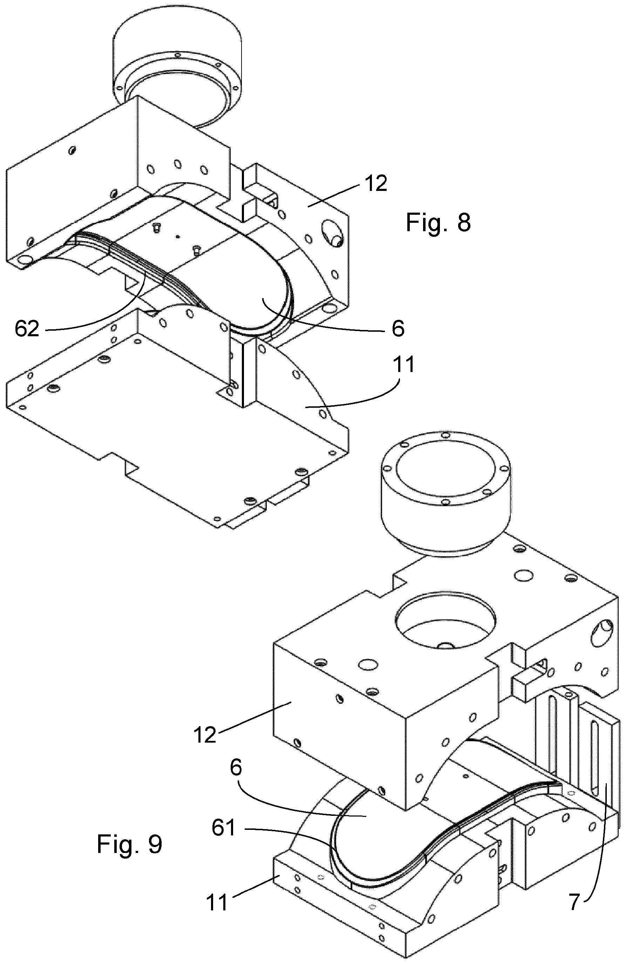

Fig. 8 is an exploded view of the compression mold of Fig. 4,
Fig. 9 is an exploded view of the compression mold of Fig. 4,

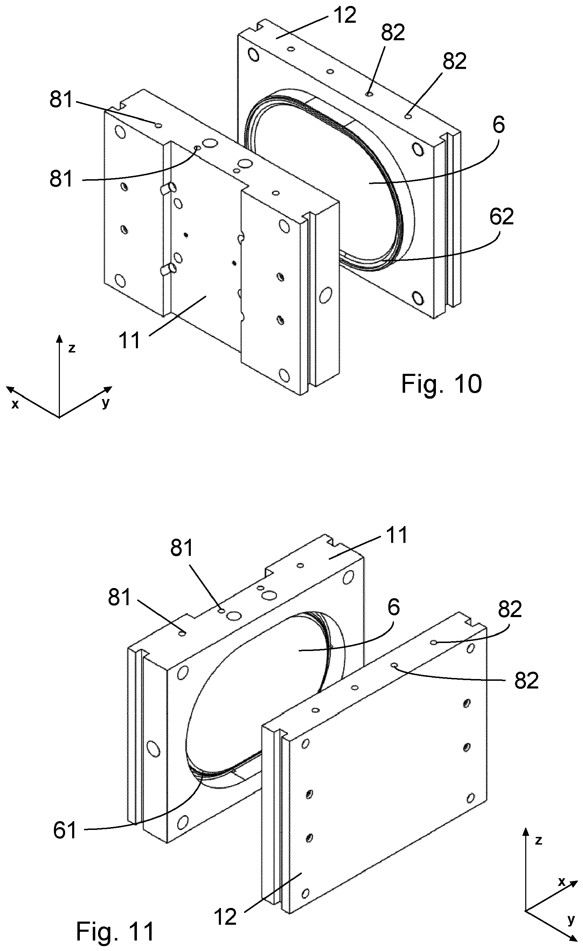

Fig. 10 is an exploded view of a compression mold according to another embodiment in a closed position,
Fig. 11 is an exploded view of the compression mold according to Fig. 10 in a closed position,

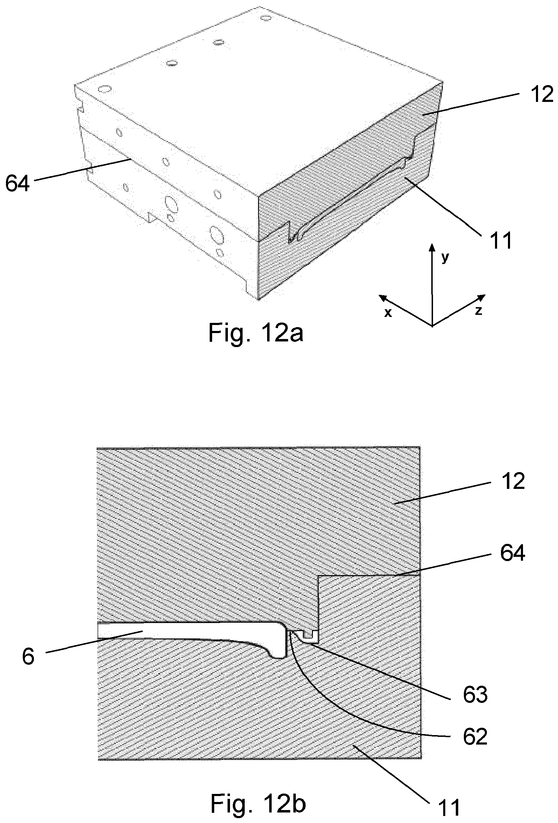

Fig. 12a is a perspective view of an embodiment of a compression mold for producing a composite article in a closed position,
Fig. 12b is an elevated sectional view across the (x,y) plane of the compression mold of Fig. 12a in a closed position, and

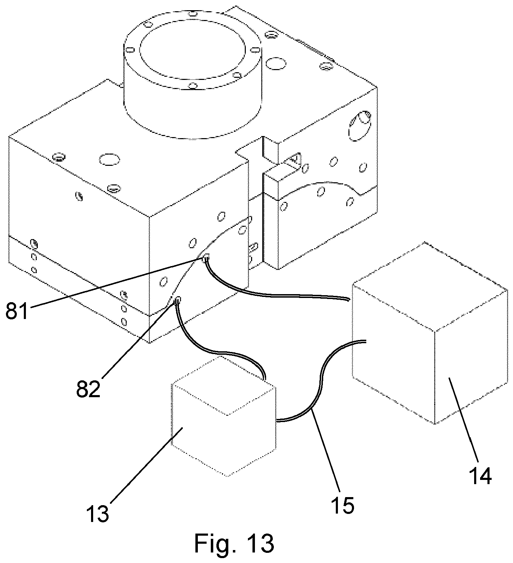

Fig. 13 is an elevated view of an embodiment of a compression mold for producing a composite article including a cooling circuit.

### DETAILED DESCRIPTION

In the following embodiments, structures and features that are the same or similar to corresponding structures and features previously described or shown herein are denoted by the same reference numeral as previously used for simplicity.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

### Definitions:

ABS as used herein refers to Acrylonitrile butadiene styrene, made by polymerizing styrene and acrylonitrile in the presence of polybutadiene. The proportions can vary from 15% to 35% acrylonitrile, 5% to 30% butadiene and 40% to 60% styrene. ABS is a common thermoplastic polymer. Its glass transition temperature is approximately 105 °C (221 °F). ABS is amorphous and therefore has no true melting point.

PC / ABS as used herein refers to Polycarbonate + acrylonitrile butadiene styrene (PC + ABS): A blend of PC and ABS that creates a stronger plastic used in car interiors and exterior parts, and, e.g., in mobile phone bodies.

HDPE: High-density polyethylene (HDPE) or polyethylene high-density (PEHD) is a thermoplastic polymer produced from the monomer ethylene. It is sometimes called "alkathene" or "polythene" when used for HDPE pipes. [1] With a high strength-to-density ratio, HDPE is used in the production of plastic bottles, corrosion-resistant piping, geomembranes and plastic lumber. HDPE is commonly recycled and has the number "2" as its resin identification code.

Low-density polyethylene (LDPE) is a thermoplastic made from the monomer ethylene. It can be produced by using a highpressure process via free radical polymerization.

Polyethylene terephthalate (or poly(ethylene terephthalate), PET, PETE, or the obsolete PETP or PET-P), is the most common thermoplastic polymer resin of the polyester family and is used in fibers for clothing, containers for liquids and foods, and thermoforming for manufacturing, and in combination with glass fiber for engineering resins. It may also be referred to by the brand names Terylene in the UK, Lavsan in Russia and the former Soviet Union, and Dacron in the US. Bio-PET is the bio-based counterpart of PET. The monomer bis(2-hydroxyethyl) terephthalate can be synthesized by the esterification reaction between terephthalic acid and ethylene glycol with water as a byproduct (this is also known as a condensation reaction), or by transesterification reaction between ethylene glycol and dimethyl terephthalate (DMT) with methanol as a byproduct. Polymerization is through a polycondensation reaction of the monomers (done immediately after esterification/transesterification) with water as the byproduct.

Polypropylene (PP), also known as polypropene, is a thermoplastic polymer used in a wide variety of applications. It is produced via chain-growth polymerization from the monomer propylene.

Bioplastics are plastic materials produced from renewable biomass sources, such as vegetable fats and oils, corn starch, straw, woodchips, sawdust, recycled food waste, etc. Some bioplastics are obtained by processing directly from natural biopolymers including polysaccharides (e.g. starch, cellulose, chitosan and alginate) and proteins (e.g. soy protein, gluten and gelatin), while others are chemically synthesized from sugar derivatives (e.g. lactic acid) and lipids (oils and fats) from either plants or animals, or biologically generated by fermentation of sugars or lipids. In contrast, common plastics, such as fossil-fuel plastics (also called petro-based polymers) are derived from petroleum or natural gas. In addition to being decoupled from the petrochemical industry, bioplastics are attractive because they can be biodegradable.

By "cooling mold" it is meant herein a compression mold 10 that actively cools the contents of the mold cavity and excludes any other compression mold arrangement where no arrangement allowing for active cooling is disclosed, thus relying solely on passive forms of cooling.

By the term "actively cooled" or "active cooling" as used herein it is meant a cooling method comprising one or more steps relying on one or more arrangements suitable for affecting the cooling rate and / or cooling profile of the molded article 1 within the mold cavity or to one or more arrangements capable of affecting the cooling rate and / or cooling profile of the molded article 1 within the mold cavity beyond the default cooling rate and / or cooling profile resulting from the physical properties of the mold parts *per* se. Active cooling is a heat-reducing mechanism and unlike its counterpart passive cooling, is dependent on energy consumption in order to operate. It may use various mechanical systems that consume energy to dissipate heat, such as a heat exchanger and / or a pump. The active cooling employs a form of forced liquid cooling wherein cooling fluid is forced through the system by an external source, such as a pump.

While the preferred cooling fluids are water or water/glycol mixtures, any liquid fluid can be used, including liquid refrigerants, fluorocarbons, gasoline, hydraulic fluid, oil, or gasses, such as air, hydrogen, or nitrogen.

By "virgin" it is meant herein unused raw material that has never been used or subjected to any processing other than for its production.

The term "used" as used herein with regard to a material refers to a material that has previously been processed to form a product.

The term "recycled" as used herein refers to a material that has been passed through a series of changes or treatments, i.e., been processed, in order to regain material for human use.

The term "molten" or "partially molten" as used herein refers to the state of a material, i.e., a composite material, that has been at least partially fused or liquefied by heat. In described herein, heat is generated by forming a turbulent centrifugal annular layer of increasing density of components along an inner wall of a mixing cylinder, i.e., mixing the components, preferably comprising exposing components to high acceleration thereby causing interaction with the braking effect of friction at walls of a mixing chamber resulting in large differences in particle velocity within the annular layer and intensive mixing turbulences. Such friction generates heat, which at least partially melts the components through the process known as "kinetic mixing".

As used herein the term "carbon fiber" refers to carbon fibers or carbon fibers (alternatively CF, graphite fiber or graphite fiber) being fibers about 5 to 10 micrometers (0.00020-0.00039 in) in diameter and composed mostly of carbon atoms. Carbon fibers have several advantages including high stiffness, high tensile strength, low weight to strength ratio, high chemical resistance, high temperature tolerance and low thermal expansion.

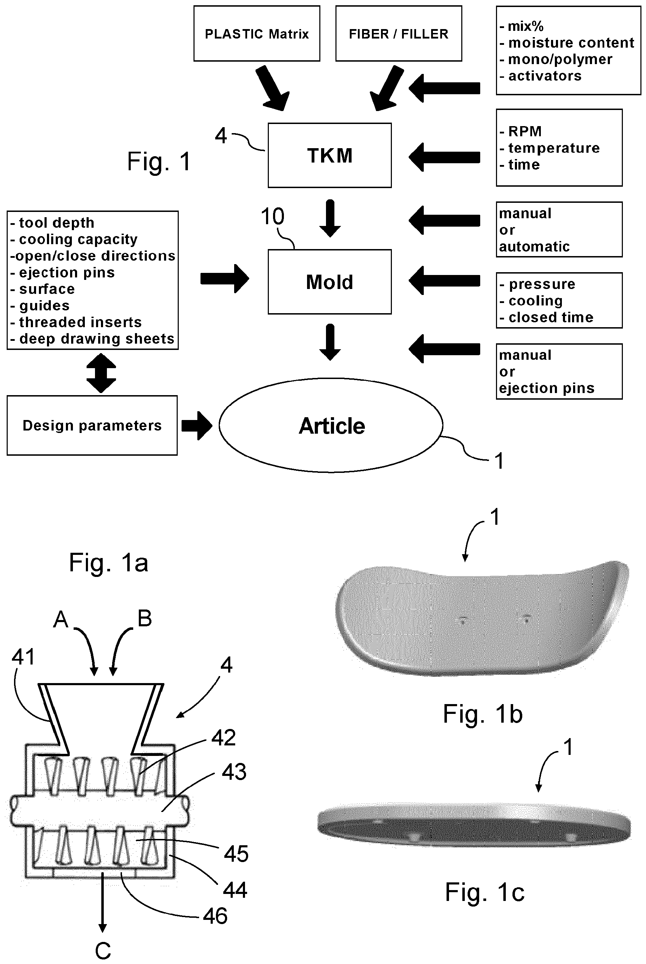

Referring firstly to Fig. 1, a blend of plastic - either virgin or used - and filler - either organic or inorganic- is mixed and heated in a thermokinetic mixer (TKM). The molten mixture is moved and placed in an appropriate compression mold 10 and formed into a molded article 1. The top-to-bottom flow represents the process from 'raw' material, through a TKM 4 and compression mold 10 to form a final product, i.e., a molded article 1, while the lateral boxes and arrows denote parameters that may be adjusted at each process step to allow for an optimal process and for obtaining a final product with the desired properties.

Referring to the diagrammatic representation of the TKM in Fig. 1a, the composite article 1 is produced from at least one virgin and/or used thermoplastic component A and at least one used fiber material component B. The method comprises supplying the at least one virgin and/or used thermoplastic component A and at least one used fiber material component B either separately or combined to the loading gate 41 of a thermokinetic mixer 4. Thereupon the components undergo thermokinetic mixing in the thermokinetic mixer 4 by mechanical action of blades 42, which convert torque supplied by crankshaft 43, together forming an impeller. The impeller is surrounded by housing 44, which confines the mixture of components A and B to the mixing chamber 45. By thermokinetic mixing, the plastic component of mixture A is at least partially melted and a composite material in the form of a mixture C of the at least partially molten thermoplastic component and the fiber material component is created and discharged through discharge gate 46.

The thermoplastic component A fulfils the function of matrix or binder by holding the filler together in the composite material to be formed. Thermoplastic type must be chosen with regards to the melting point, so this will not exceed the combustion temperature of the fiber component B (the filler) or of other components present.

Once the thermoplastic is molten, mixture C is relatively warm and plastically deformable, i.e., relatively little force is required to change the shape of mixture C. At this stage, the mixture can be a lump that is easily deformed. Mixture C is discharged through discharge gate 46 and removed from the thermokinetic mixer 4 as lump of material that does not have a specific shape.

Next, and referring to Fig. 2, mixture C, the lump of at least partially molten thermoplastic component and fiber material component, is placed in a mold cavity 6 of a multiple part cooling compression mold 10 that is in an open position. Thereupon, the compression mold 10 is closed, trapping the mixture in the mold cavity 6, and the mixture is cooled in the compression mold 10 until the thermoplastic component has substantially solidified (no longer is partially molten), thereby forming the composite article 1. Next the composite article 1 is removed from the cooling compression mold 10 either manually or by using ejection pins.

Referring to Fig. 13, cooling of the compression mold 10 is carried out actively, i.e., a cooling fluid, which is in turn cooled by an operatively connected heat exchanger (see examples) is circulated through cooling channels 8 in the mold parts 11, 12 by an circulation pump 13, thereby absorbing heat from the mold parts in contact with the composite material, thereby accelerating the cooling process when compared to cooling the mixture passively, i.e., allowing the mixture to cool according to the intrinsic thermal conductivity properties of the compression mold 10 and mold parts and the ambient temperature. Hence, the cooling channels 8 are part of a cooling circuit 15 that includes a heat exchanger 14, e.g., in the form of a radiator, and in which circuit the cooling medium is circulated by action of the pump 13.

The mixture is cooled to approximately 40°C, and thus, solidifies substantially, i.e., is substantially no longer partially molten. The cooling fluid temperature is preferably set to 10°C, thereby enabling an efficient and reproducible cooling time and hence, allowing for a relatively short time where the cooling compression mold 10 needs to be closed, i.e., allowing for a short mold closing time.

Pressure of the mold parts 11, 12 to the mixture is controlled by a controller affecting the force applied by a hydraulic press to the mold parts 11, 12.

The rotational speed of thermokinetic mixer 4 is also controlled by an additional controller, thereby achieving the desired discharge temperature, i.e., the temperature of the molten composite material B, since discharge temperature is a function of rotational speed (and mix time). The controller adjusts the rotational speed to between 2000 rpm and 4000 rpm, such as between 2500 rpm and 3200 rpm, such as to approximately 3000 RPM.

The thermoplastic component is comprised at between approximately 40% w/w and 50% w/w, the composite material further comprises between approximately 1% w/w and 5% w/w coloring agent, and between approximately 1% w/w and 55% w/w filler. Variations of above-disclosed percentages are also contemplated and give equally good results, such a 50% w/w thermoplastic component combined with 50% w/w fiber component, such as coffee bean husks. A high percentage of filler in the composite material minimizes the shrinking of the plastic component.

The cooling compression mold 10 has two mold parts 11, 12 with depressed areas. When the edges 62 of the areas are in contact with each other, i.e., the cooling compression mold 10 is in a closed position, a mold cavity 6 is formed. The edges 62 of the mold parts 11, 12 around the mold cavity 6 meet along the full perimeter of the mold cavity 6 in a closed position and thereby form a sealed enclosure.

Mold parts 11, 12 comprise cooling channels 8 coupled to a source of cooling fluid. Cooling fluid is circulated through the cooling channels 8 by a pump 13. Pump 13 is operatively connected to a controller, which adjusts the volume flow rate and direction of flow of the cooling fluid within the cooling channels 8 so that the cooling effect of the mold parts 11, 12 is adjusted. The controller is operatively connected to a temperature sensor (not shown) embedded in one of the mold parts 11, 12 for direct sensing of the temperature variation during the cooling process. Acceleration of the rate of flow may increase the cooling effect of the mold part on the mixture, thus accelerating the cooling process, while decreasing the flow rate or reversing the flow direction so that the same fluid remains in a cooling channel 8 for a longer period may result in a decrease in the temperature differential between the cooling fluid and the mold parts 11, 12 and, thus, in a decrease of the cooling effect and a deceleration of the cooling process. Adjusting the cooling effect and, thus, the cooling process by such means allows to obtain molded articles 1 with the desired properties and with elevated success rate, thus diminishing waste and cost and increasing the raw material to finished product ratio.

The cooling process is defined as the change of temperature of the mixture C over time. Change in temperature is measured between the discharge temperature, i.e., the temperature at which the mixture C is discharged from the TKM 4 and the cooled temperature, i.e., the temperature at which the molded article 1 is substantially solidified.

By carrying out iterative cooling processes, cooling profiles for a particular composite material according to different ambient temperatures can be obtained. Thus, cooling times and, importantly, cooling mold closed times, can be predicted, and preset for the abovementioned parameters and, thereby, production of molded articles 1 is achieved at a greater success-rate and within shorter times.

Cooling channel inlets 81 are present on two sides of a mold part 11, 12 and a corresponding number of cooling channel outlets 82 are present on opposing sides of the inlets. As shown in Fig. 7, inlets 81 and outlets 82 are arranged alternatively along the parting line 63, such that substantially straight cooling channels 8 are arranged to conduct cooling fluid in opposing directions in each of contiguous cooling channels 8 as observed in a single-plane sectional view of two contiguous cooling channels for achieving a homogeneous cooling effect on the article 1.

Cooling channels 8 describe substantially straight paths between the two the sides of a cooling mold part 11, 12. Thereby, manufacturing of the mold parts is simplified, since channels may easily be drilled from side to side through the mold part 11, 12 to form the cooling channels 8. This manufacturing method is simple and therefore cost-effective in comparison to producing mold parts comprising cooling channels describing other paths within a mold part.

The thickness of the cooling mold parts 11, 12 between the cooling channels 8 and the cooling mold cavity 6 is chosen so that heat transfer from the mold cavity 6 to the cooling fluid is optimized for an efficient cooling effect along the entire length of cooling channels 8.

Mold part 11 forms a male part and mold part 12 forms a matching female part, where movement between the two parts 11, 12 allows the mold cavity 6 to be formed with the seal maintained along the mold part parting line 64 thereby preventing outflow of the a mixture of an at least partially molten thermoplastic component and a fiber material component between the male and female parts at the edges 62 of the mold parts 11, 12 around the mold cavity 6.

A fluidic actuator (e.g., a hydraulic press, not shown) is operably coupled to the mold parts 11, 12 and applies a closing force to the mold parts 11, 12 which, in turn, apply a pressure to the mixture. Further, a controller is configured to control the pressure applied by the fluidic actuator to the mixture, thereby at least countering the volume expansion of the molten mixture that may still be occurring due to internal heat within the lump of molten material. The closing force applied by the fluidic actuator also helps prevent leakage of molten material from the cooling compression mold 10 at the parting line 64. The fluidic actuator is controlled by a controller configured to control the applied pressure to ensure that the pressure does not fall below a minimum requirement for fulfilling the abovementioned functionality, while not exceeding a pressure that might damage the mold cavity edges 62. Due to the active cooling of the mold parts 11, 12, the applied pressure may be increased as the temperature generated by such pressure may be more easily dissipated / absorbed by the cooling mold 10 and more specifically by cooling fluid.

Before edges 62 are moved to contact each other forming a seal along the parting line 64, the pressure applied to the lump of molten material causes the material to adopt the shape of the mold cavity 6, to occupy the entire space within said mold cavity 6 once the seal is formed. Excess mold material, i.e., mixture C arranged in the one mold part 11, 12, will flow, pushed by said applied force, over the edge 62 and into the circumferential recess 63 as the mold parts 11, 12 are moved towards each other (Fig.12b). Collection of said excess material allows a volume of mixture C in excess of the volume of the mold cavity 6 to be arranged and compressed in the compression mold without this hindering the correct joining of the edges 62 and without having to measure the amount of mixture C to be added, thereby reducing the number of required steps in the process and reducing article manufacture time.

The mold cavity 6 is lined with material comprising aluminum for optimal heat transfer from the mold cavity to the mold parts 11, 12 and the cooling fluid in the cooling channels 8.

Constant heat transfer is ensured by a heat exchanger (see examples) and a heat exchange controller being coupled to the cooling channels 8 that adjust and maintains the cooling fluid at a desired temperature by recirculating the cooling fluid through the cooling channels 8 after re-cooling the cooling fluid coming from the outlets 62 to the preset/desired temperature.

### Materials

### Plastic

Plastic works as a matrix or binder to hold together the filler in the composite material to be formed. A successful process does not depend on whether the material is obtained from waste streams, refuse or is virgin, unused but possibly processed material.

The type of thermoplastic used must be chosen with regards to its melting point, so that this will not exceed the combustion temperature of the filler.
- A coloring agent may be used; however, a coloring agent will change the viscosity of the molten material. Hence there is a trade-off with regard the ability to fill the compression mold and the visual characteristics of the molded article 1 obtained.
- The process is very tolerant in terms of using different plastic types in a same batch, even with different melting points. For visual and tactile purposes, a mix of plastic types with different melting points can be employed to give the final product a specific structure and/or different colors.

### Filler

The filler, i.e, fiber component can contribute between 1% w/w and 60% w/w of a composite material. The amount of filler used will affect the viscosity of the molten material and hence the ability to fill cavities in the compression mold. Physical properties of the final product will be affected by the amount and type of filler used. Generally, stiffness increases with increasing amounts of filler, while tensile and compressive strength maintain inverse correlations with increasing amounts. Also, increased filler will decrease elasticity and viscosity of the mix to the point where ease of forming a solid and stable molded article is hindered. Further, excessive use of filler will impede sufficient melting for obtaining a malleable mix.

A fibrous material used as filler, whether organic or inorganic, might also increase the strength of the molded article, however, mixing/heating of excessive filler in the TKM may lead to shredding of the fibers.

### Drying

If the material contains water: In the mixing and heating process in the TKM most of the water will be evacuated from the mixing pod on the form of steam. However, some of the water vapor might be carried forward to the mold and be present in the molding process. When the compression mold is closed a sealed enclosure is created within, and the vapor pressure might damage integrity of the molded article 1.

Drying can be performed in a slowly rotating, open cylinder placed in a drying kiln. In on industrial
setting, it would be advantageous to use equipment similar to chip-drying in the chipboard industry.

### Preparing Filler for production

Mask is a waste stream from beer production. At The end of beer production, mask is dissolved in water and infused with proteins. In a first step protein is removed from the fibers in a mechanical and enzymic decomposition. Fibers arriving at the production site are saturated with water and contain nutrients. To stop any further fermentation, it is important to either start the drying immediately or store The mask in a freezer.

### Coffee husk

Husk is a waste stream from the coffee beans roasting process. Husk is the 'skin' that is peeled off the fruit and as bulk has a very high relative volume to weight ratio, and is hence very sensitive to moisture variations. Husk should be stored under controlled humidity conditions. Since husk hos on alternative use in energy recovery, if is often turned into briquettes. Transportation in this form has its advantages, but briquettes need to be broken into smaller particles before use in a TKM.

### Paper

Paper pulp is a waste stream from the process of recycling paper and cardboard. Although diluted in water during The process, the pulp will be transported and delivered in a dry state.

Like coffee husk, paper pulp is very susceptible to moisture variation and should be stored dry.

### Wood-based production waste

Chips, cut-offs, dust, and shavings from furniture and other wood-based productions. For The sake of loading the TKM, it might be needed to shred the fraction into smaller pieces since the size of the single pieces is important.

### Wood chips - virgin

The optimal chip size for The TKM should be obtained already at the source to avoid the need for a second shredding. A drying cyclone similar to those used in the chipboard industry is recommended to reduce the moisture content.

### TKM

Several parameters must be adjusted before running the TKM 4 in automatic mode.

Beside the 'open' time-window for loading the mix of plastic and filler and a similar window for
the discharge of molten material, it is needed to choose rotation speed (rpm) and discharge
temperature.

### Parameters

- RPM. Default setting: 1000 rpm. A faster rotation will result in a shorter process time. It comes, however, at a cost. The filler components, whether organic, inorganic, fibrous or not, will be broken to smaller pieces. Hence the rpm is a trade-off between these two parameters and must be tested for each new type of mix. For PP and ABS mixed with spent grain and coffee bean shells, 4000 rpm is used.
- Discharge temperature. The range for this setting is limited by the melting point for the given plastic type and the chosen filler's combustion temperature. In that range a relatively low temperature will result in a shorter process time, whilst a higher temperature might be needed to make the material more fluid to fill intricate cavities in the compression mold. The discharge temperature is a key factor for the whole process flow. Time and energy consumption while heating in the TKM and time and energy consumption while solidifying and cooling in the pressing tool.

### TKM operation

The TKM 4 is equipped with adequate exhaustion, specifically, at discharge gate 46, where the molten material is discharged.

The mix of plastic and filler is filled into the loading gate 41 (Fig. 1a), and a tray for collecting the molten material B is placed at the discharge gate 46 before starting the thermomixing.

The heating process time in the TKM is affected, in addition to by the above-mentioned parameters, by the size of the batch. A smaller batch results in a longer process time.

### Moving molten material

The molten material mix discharged from the TKM 4 is moved, e.g. manually in a tray or automatically by a robot or the like and placed by hand or by the robot in the mold cavity 6.

Turning now to Figs. 2 & 3 the tool to form the molten composite into a new product is a two-part cooling compression mold 10 that when closed creates a mold cavity 6, which is an enclosure sealed along a parting line 63. The compression mold 10 is placed and operated in a hydraulic press (not shown). The material (molten composite mixture B) is kept in the mold cavity 6 till it is solidified by cooling it to a temperature where it may be removed from the mold part 11, 12, thus obtaining the molded article 1. In this embodiment the compression mold 10 is configured to produce an article 1 in the form of a seat back for a chair as shown in Fig. 1b.

The technical design of the compression mold 10 borrows some of its properties from the design of plastic injection molds, others from the design of compression molds. Metal sheet deep-drawing technique is used to create the aluminum inlay that covers the inner surfaces of the compression mold.

Similar to a compression mold, type of mold 10 is open when loaded with a batch of composite material. Unless the mold comprises intricate voids, if is very tolerant to the fluidity of the material and shape and size of the filler constituents. Since the mold is open when loaded, it will distribute the molten material by squeezing it out towards the edges, as a result casting-burrs are unavoidable. Threaded inserts are placed for connecting screws. The high percentage of filler in the composite material minimizes the shrinking of the plastic component upon cooling.

Turning now to Figs. 4 & 5, the type of cooling mold 10 is placed horizontally in a hydraulic press (not shown) and is opened when loaded. Because the molten material expands when removed from the TKM 10, the second mold part 12 has an inverted bowl shape to accommodate the molten composite material. The counterpart first mold part 11 acts as a piston face that compresses the molten material, pushed by the hydraulic press (not shown) and squeezes it across the entire surface of the first and second mold parts 11 and 12, thus filling the entire mold cavity 6. Cooling channels 8 are arranged in both first 11 and second 12 mold parts, at a distance from mold cavity 6 that allows for a relatively fast cooling time of the molded article 1 in the compression mold 10.

As shown in Figs. 6 & 7, cooling channels 8 describe a substantially straight path through mold parts 11 and 12, with cooling channel inlets 81 and outlets 82 arranged on opposing sides of one mold part 11 or 12. Cooling channel inlets 61 and outlets 62 alternate along the parting line 63, such that cooling fluid is circulated in opposing directions when observed in a single-plane cross-section along coordinate axes (x,y), (y,z) or (x,z).

Figs. 8 & 9: Contrary to most compression mold types, this kind of mold does not rely on parallel surfaces and, thus, has closed edges', i.e., mold cavity perimeters 62 on each of mold parts 11 & 12 to create a sealed enclosure 6 along the mold part parting line 64. Further, while a compression mold requires heating for correct operation, this type of mold operates by effecting cooling.

In a second embodiment represented in Figs. 10 & 11 cooling channel inlets are on one side of mold parts 11, 12 yet are arranged such that flow direction is in opposite directions through the cooling channels 8 of respective mold parts 11, 12 when the cooling mold 10 is closed, as observed in a single-plane cross-section along coordinate axes (x,y), (y,z) or (x, z). The mold 10 of this embodiment is configured to manufacture an article 1 in the form of the seat for a chair as shown in Fig 1c.

The seat back of Fig. 1b and the seat of Fig. 1c may from a chair when mounted on a suitable frame (not shown).

### Example 1

1 kg of material in a 50% w/w fiber / 50% w/w thermoplastic component mixture was used as input. To keep water temperature as close to 10°C as possible, a heat-exchanger coupled to the cooling channels was used. Shorter cooling times are achieved with larger molding cavity areas, which define the heat-exchanger capacity requirement. With, e.g., four cooling procedures running in parallel in an equal number of hydraulic presses, an approximation of the total required capacity of a heat-exchanger can be calculated by evaluating the mold cavity's surface areas and the total volume of the mold cavities and hence calories (kJ) to be reduced. Molten composite material was placed in the middle of the open mold. Prior to this, the piston stroke and closed time was chosen based on thickness and total volume of the batch. Holding pressure was maintained at 150 bar.

The mold was oriented horizontally, and the main opening direction was vertical.

### Ozone-Treatment

Molded articles 1 were treated with ozone to remove the "burnt" odor being released due to heating of organic fibers. The molded articles 1 were placed in a closed room with a running ozone-generator for anything between 5-72 hours, preferably for 24 hours.

### Example 2

Production parameters for a two-part article 1:
- Mix
   400 g PP-plastic/400 g spent grain from beer waste for the first part.
   375 g PP/375 g spent grain for the second part.
- TKM
   Discharge temperature 175°C.
   4000 rpm.
- Pressing Tool
   120 sec. cooling time for the first part.
   90 sec. for the second part.
- Assembly
   Attachment of double-sided tape.
   Pressing the two parts together in o hydraulic press.

Example 3:
- Mix
   495 g PP-plastic/495 g spent grain.
- TKM
   Discharge temperature 190°C.
   4000 rpm.
- Mold cooling time
   300 sec. cooling time.

Example 4:
- Mix
   280 g PP-plastic/280 g spent grain
- TKM
   Discharge temperature 180°C.
   4000 rpm.
- Mold cooling time
   300 sec. cooling Time

## Claims

**1.** A method for producing a composite article (1) from at least one virgin and/or used thermoplastic component (A)and at least one used fiber material component (B) comprising:
- supplying said components (A, B) to a thermokinetic mixer (4),
- thermokinetic mixing the at least one thermoplastic component (A) and the at least one fiber component (B) in the thermokinetic mixer (4) to a discharge temperature, thereby at least partially melting the plastic component and creating a composite material in the form of a mixture (C) of the at least partially molten thermoplastic component and the fiber material component,
- arranging the mixture (C) of at least partially molten thermoplastic component and fiber material component in a mold cavity of a cooling compression mold (10),
- cooling the mixture of at least partially molten thermoplastic component and fiber material component in said cooling compression mold (10) until the thermoplastic component has substantially solidified, thereby forming said composite article (1), and
- removing the substantially solidified composite article (1) from the cooling compression mold.

**2.** The method according to claim 1, wherein at least 50% of the thermoplastic component (A) is used material, such as at least 60%, such as at least 70%, such as at least 80%, such as at least 90%, such as approximately 100%.

**3.** The method according to any one of claims 1 or 2, wherein the discharge temperature of the mixture (C) is between 150°C and 280°C, preferably between 200°C and 250°C, more preferably between 180 °C and 240 °C and most preferably approximately 230°C.

**4.** The method according to any one preceding claim, wherein the temperature of the mold parts (11, 12) is below 100°C during the first three minutes of molding, such as below 80°C, such as below 60°C, such as below 50°C, such as at approximately 40°C.

**5.** The method according to any one preceding claim, the method further comprising the step of opening the cooling compression mold (10) after either the thermoplastic component or the composite article (1) has substantially solidified to a temperature below 50°C, such as approximately 40°C.
5. The method according to any one preceding claim, wherein the article (1) is actively cooled by circulating a cooling fluid through at least one cooling channel (8) in at least one mold part (11, 12), thereby achieving a cooling effect of said at least one mold part (11, 12) on the composite article (1), said method further comprising adjusting the cooling effect of the compression mold (10) to achieve sufficient solidification for removal of the composite article (1) within a predetermined amount of time, wherein adjusting the cooling effect comprises adjusting the temperature, flow rate or flow direction of the cooling fluid flowing through the at least one cooling channel (8).

**6.** The method according to any one preceding claim, wherein at least two cooling channels (8) are used to achieve a cooling effect of at least one mold part (11, 12) on the composite article (1), wherein fluid is circulated in opposing directions in each of said cooling channels (8) for achieving a homogeneous cooling effect on the article.

**7.** The method according to any one of claims 5 or 6, wherein the cooling fluid is at a temperature between approximately 10°C and 25°C.

**8.** The method according to any one preceding claim, further comprising controlling pressure applied by the mold parts (11, 12) to the mixture (C) of at least partially molten thermoplastic component and fiber material component in the mold cavity (6), wherein pressure applied is between 100 bar and 200 bar, such as between 125 bar and 175 bar, such as approximately 150 bar.

**9.** The method according to any one preceding claim, wherein the kinetic mixer (4) is a rotating kinetic mixer, the method further comprising the step of controlling rotational speed of the kinetic mixer and/or time to achieve a desired discharge temperature, the rotational speed being between 2000 rpm and 4000 rpm, such as between 2500 rpm and 3200 rpm, such as approximately 3000 RPM.

**10.** The method according to any one preceding claim, wherein when the fiber component comprises an organic fiber component, said organic fiber component comprises one or more of coffee ground, coffee husk, paper, cardboard, spent grain, or textile, and wherein when the fiber component comprises an inorganic fiber component, said inorganic fiber component is mineral-based and/or comprises glass or carbon fibers.

**11.** The method according to any one preceding claim, wherein the thermoplastic material comprises one or more of ABS, PC/ABS, HDPE, LDPE, bio plastic.

**12.** The method according to any one preceding claim wherein the composite article is produced with thermoplastic component within a range from 40% w/w to 99% w/w and fiber component within a range from 15% w/w to 60% w/w, such as 20% w/w to 60% w/w, such as 30% w/w to 60% w/w, such as 40% w/w to 60% w/w, such as 50% w/w to 60% w/w.

**13.** The method according to any one preceding claim further comprising the step of supplying between 1% w/w and 5% w/w coloring agent to the thermomixer (4) prior to arranging the mixture in a mold cavity (6).

**14.** The method according to any one preceding claim, wherein the volume of the mixture (C) arranged in the mold cavity is greater, preferably slightly greater, than the volume of said mold cavity (6) when said mold parts (11, 12) are in the closed position, and preferably collecting a part of the volume of said mixture (C) in excess of the volume of said mold cavity (6) in a recess (63) connected to the mold cavity during closing of the compression mold (10), said recess preferably being arranged adjacent an edge (62) of at least one of said mold parts (11, 12) that forms a boundary of said mold cavity (6) when said mold parts (61, 62) are in the closed position.

**15.** A composite material obtained by:
- supplying at least one virgin and/or used thermoplastic component (A) and at least one used fiber material component (B) to a thermokinetic mixer (4),
- thermokinetic mixing the at least one thermoplastic component (A) and the at least one fiber component (B) in the thermokinetic mixer (4) to a discharge temperature, thereby at least partially melting the plastic component and creating a composite material in the form of a mixture (C) of the at least partially molten thermoplastic component and the fiber material component, such that the fibers of the fiber component (B) are embedded in the thermoplastic material of the thermoplastic component (A) as a result of said thermokinetic mixing, such that the thermoplastic material holds the fiber component fibers together when cooled, thereby acting as a binder.

**16.** The composite material of claim 15, comprising fiber component within a range from 15% w/w to 60% w/w, such as 20% to 60% w/w, such as 30% w/w to 60% w/w, such as 40% w/w to 60% w/w, such as 50% w/w to 60% w/w.
